(19) **Europäisches Patentamt**
**European Patent Office**
**Office européen des brevets**

(11) **EP 2 225 481 B1**

(12) **EUROPEAN PATENT SPECIFICATION**

(45) Date of publication and mention
of the grant of the patent:
**26.10.2011 Bulletin 2011/43**

(51) Int Cl.:
**F16G 5/16** (2006.01)

(21) Application number: **07875271.4**

(22) Date of filing: **24.12.2007**

(86) International application number:
**PCT/EP2007/064528**

(87) International publication number:
**WO 2010/034320 (01.04.2010 Gazette 2010/13)**

(54) **DRIVE BELT**

ANTRIEBSRIEMEN

COURROIE D' ENTRAINEMENT

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**08.09.2010 Bulletin 2010/36**

(73) Proprietor: **Robert Bosch GmbH**
**70442 Stuttgart (DE)**

(72) Inventor: **FAES, Paulus, Adrianus, Josephus, Maria**
**NL-5045 ZH Tilburg (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A1- 1 069 342      EP-A1- 1 219 860**
**WO-A1-98/04847       WO-A1-2006/068473**
**JP-U- 63 033 046      JP-U- 63 115 653**

**Description**

The present invention relates to a drive belt according to the preamble of claim 1. Drive belts of the present type are generally known through their application in continuously variable transmissions intended for the transmission of mechanical power at a continuously variable speed and torque ratio between an engine and a load in particular for automotive purposes. Such transmission and drive belt is, for instance, described in the European patent application EP-A-1219860. Another transmission and drive belt known from the prior and is described in the European patent application EP 1069 342.

The known drive belt generally comprises an endless carrier and an array of several hundred transverse elements, each having a longitudinally facing front main surface, which elements are essentially oriented in parallel. The carrier is provided in a slot of the elements such that the elements may freely slide along the carrier in the longitudinal direction thereof. The belt's transverse elements are each provided with a so-called rocking edge on the front main surface, which rocking edge forms the transition between a bottom section of the element having a longitudinal dimension or thickness that reduces in radially inward direction and a top section of the element having a thickness that is more or less constant, at least in comparison. The transverse elements each further include an at least generally trapezoid-shaped lower or body part that is located below the carrier receiving slot, an at least generally arrow-head shaped upper or head part and a central or pillar part placed between and interconnecting said head and body parts. Usually, the said rocking edge is provided in the said body part, i.e. radially inward form the carrier receiving slot, which body part is further provided with laterally facing side or contact surfaces, one on either side thereof, for arriving into a frictional contact with pulleys of the transmission during operation thereof.

In the continuously variable transmission the drive belt rotationally connects two pulleys, each having two essentially conically shaped pulley discs that define a V-groove of variable width, where between a longitudinally curved section of the drive belt is located. The posture of the drive belt in such transmission thus includes two longitudinally straight trajectory parts where it crosses from one pulley to the other and two longitudinally bent trajectory parts where it runs between and in frictional contact with the discs of a pulley at a respective radius of curvature for each of said two pulleys, which radii define the geometric transmission ratio of the transmission. In the said bent trajectory parts the transverse elements are mutually contacting through their respective rocking edges.

The pulley discs exert a clamping force on the transverse elements of the drive belt, which force, on the one hand, enables torque transmission through friction between the respective pulley and the drive belt and, on the other hand, urges the transverse elements radially outward with respect to the axis of rotation of the respective pulley. The actual radial movement of the transverse elements is limited by the carrier, so that the clamping force is transmitted by the transverse elements to the carrier via a normal force there between. The carrier is thereby put under tension enabling torque transmission from a driving pulley to a driven pulley by means of the cross elements pushing each other forward along the circumference of the carrier, while being supported and guided thereby. On the other side of the drive belt, the transverse elements are returned from the driven pulley back to the driving pulley, however at a much lower, possibly even zero, pushing force existing there between.

It is common practice that the combined thickness of the transverse elements of the drive belt is slightly smaller than the circumference of the carrier, such that a gap exists in longitudinal direction between at least two adjacent, i.e. adjacent rather than directly abutting transverse elements, a/o for allowing the drive belt to be assembled without difficulty. This gap is denoted the belt's longitudinal clearance, which is defined and may be measured by placing the belt in a circular posture and sliding two adjacent transverse elements thereof apart, i.e. in mutually opposite longitudinal directions along the circumference of the carrier, until all of the transverse elements of the belt are mutually abutting through their respective rocking edges in a continuous array. The gap thus formed between the said two adjacent but slid apart elements defines the so-called initial static clearance that is to be measured at the radial position of the rocking edge. Hereby, it is remarked that during operation in the transmission the actual or dynamic clearance in longitudinal direction between the elements varies in dependency on the exact posture of the drive belt, i.e. on the geometric transmission ratio, as well as the load applied thereto. Moreover, the belt's longitudinal clearance tends to increase over time, due to wear of the transverse elements during operation of the transmission. Indeed, it has been found by applicant that by the end of the service life of the drive belt, the ultimate dynamic clearance typically can amount up to ten times the said initial static clearance.

Although it greatly facilitates drive belt assembly, it has also been recognized in the art that longitudinal belt clearance has an adverse effect on transmission efficiency, which may be understood as follows. When entering the driving pulley the transverse elements have to overcome some resistance before they are taken up by said driving pulley, i.e. they have to be actively pushed between the discs the driving pulley, due to the interplay of forces in the transmission. Moreover, once such transverse elements arrive into frictional contact with the driving pulley they are accelerated forward by the rotation thereof. By these two effects the dynamic clearance tends to accumulate in a first or entry part of the belt's longitudinally bent trajectory on the driving pulley. This means that only a part of this bent trajectory is available for the build-up of a pushing force between the elements, which latter, second part is denoted the active part of this bent trajectory wherein the elements are mutually abutting. In such active part the transverse elements are slipping backwards relative to the rotation of the driving pulley, whereby the clearance between adjacent elements present in the entry part is removed. However, by such slipping, energy is dissipated and transmission efficiency is adversely affected.

It is an object of the invention to improve the efficiency of the transmission and, more in particular, to mitigate the above-mentioned adverse effects of the longitudinal belt clearance. Obviously, such object could in principle be realized by reducing the amount of static clearance, which has already been suggested in art as represented by, for example, the publications JP-A-63/266247 and WO-A-98/04847. This solution, however, may not be favored because of the problems that may be encountered at assembly of the present type drive belt.

According to the present invention, however, the above object may alternatively be realized by applying the drive belt according to claim 1, favorably without placing a special requirement on the amount of longitudinal belt clearance.

By applying the claimed measure it is effected that in the straight return trajectory part of the drive belt, i.e. where the transverse element are transported from the driven pulley back to the driving pulley, the elements are mutually contacting through their respective thickest part, i.e. on the radial outside thereof. Hereby, the thickness increase or wedge shape of the top section of the transverse elements is defined such that at least the initial static clearance is compensated for by the elements in the straight return trajectory part. Since the length of the return trajectory part typically amounts to slightly less than one quarter of the total belt circumference length, as is derived in detail in EP-A-1219860, the number of transverse elements present in such trajectory part can be approximated on the save-side by the following equation (1):

$$Ne = \frac{L}{4 \cdot Dr} \tag{1}$$

wherein:

- Ne represents the approximate number of transverse elements in the straight return trajectory part of the drive belt,
- L is the belt's circumference length at the rocking edge and
- Dr is the thickness of the belt's transverse elements at the rocking edge thereof.

This number of elements Ne is thus available to compensate for the initial static clearance by the feature of wedge shaped top section thereof in accordance with the present invention, such that the following equation (2) can be derived:

$$\Delta D = \frac{Csi}{Ne} = \frac{4 \cdot Dr \cdot Csi}{L} \tag{2}$$

wherein:

- $\Delta D$ is the average thickness increase of the top section of the transverse elements and
- Csi is the initial static clearance incorporated in the drive belt.

Preferably, also the ultimate dynamic clearance is at least partly compensated in the same manner, whereto $\Delta D$ should be greater than the value calculated by equation 2. In this respect, the complete compensation of the said ultimate dynamic clearance of course represents a purposeful upper limit for the said average thickness increase $\Delta D$. Based on the above observation that the ultimate dynamic clearance typically can amount up to ten times the said initial static clearance the following range may thus arrived at for the average thickness increase $\Delta D$:

$$\frac{4 \cdot Dr \cdot Csi}{L} \leq \Delta D \leq \frac{40 \cdot Dr \cdot Csi}{L} \qquad . \tag{3}$$

Because in some of the currently applied drive belt designs the above parameters of L. Csi and Dr combine in such a manner that the upper extent of the $\Delta D$-range prescribed by equation (1) partly overlaps with the alternatively defined range 0.01•Dr ≤ ΔD ≤ 0.20•Dr that is known from EP-A-1 219 860, albeit for an entirely different purpose, such theoretically known range is hereby explicitly disclaimed.

Further, it is noted that in the design of the currently applied drive belts it has already been adopted as a basic rule that the parameter of ΔD should not become smaller than zero in order to avoid that the belt assumes a concave, i.e. radially inward bent, shape in the said straight trajectory part, whereby the head part of the transverse elements would be unfavorably loaded by the carrier. Together with the notion of the unavoidable variations and tolerances in manufacturing this means that the individual transverse element are typically produced within a certain tolerance. e.g. such that it is satisfied that -0.0025•Dr ≤ δD ≤ 0.0075•Dr, wherein δD is the thickness increase of the top section of a respective, i.e. individual transverse element. In practice. i.e. in the known drive belts, the parameter ΔD is thus provided with a notional positive value that, however, in practice does not exceed 0.0035•Dr, which practically applied lower extent of a possible ΔD-range is hereby also explicitly disclaimed.

The invention is illustrated in the accompanying drawings, in which:

   Figure 1 is a schematic depiction drawn in perspective of a transmission wherein the drive belt according to the invention is used;
   Figure 2 is a cross section of the drive belt;
   Figure 3 schematically indicates the feature of the belt's initial static clearance;
   Figure 4 is a schematic depiction of a cross-section of the figure 1 transmission in operation, indicating the feature of dynamic clearance: and
   Figure 5 is a schematic side elevation of a part of the drive belt according to the present invention in a straight return trajectory between the transmission pulleys.

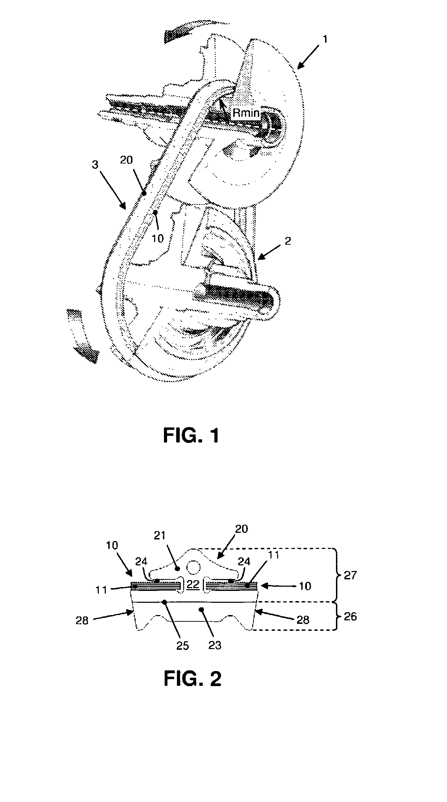

Figure 1 is a schematic depiction drawn in perspective of a transmission wherein the drive belt 3 according to the invention is used, which comprises a number of transverse elements 20 that are mounted on an endless carrier 10 such that the elements 20 can slide over the carrier 10 along its longitudinal direction. The transmission comprises two pulleys 1 and 2 that each define a tapered groove of variable width, wherein a longitudinally bent part of a drive belt 3 is mounted. In the figure the drive belt 3 is the most tightly bent in the first or driving pulley 1 that during operation is connected to and will be driven by an engine or motor (not shown). In between the pulleys 1 and 2 the drive belt 3 follows an essentially straight trajectory. This type of transmission and its operation are well known in the art.

Figure 2 is a cross section of the drive belt 3 as seen in longitudinal direction. The figure shows a front elevation of a transverse element 20, and a cross section of the carrier 10, which in this embodiment of the drive belt 3 is shown to comprise two parts that each comprise a number of 'nested', i.e. radially stacked, continuous bands 11 mounted in a respective recess or slot 24 in the element 20. Each such slot 24 is provided on and opens towards a lateral side of the element 20 in-between an effectively trapezoid-shaped lower or body part 23 and a an effectively arrow-head shaped upper or head part 21 of the element 20. These upper and lower parts 21; 23 are interconnected via a central pillar part 22 of the element 20. In the body part 23 there is provided a so-called rocking edge 25 that forms the transition between a bottom section 26 of the element 20 having a longitudinal dimension or thickness that reduces in radially inward direction and a top section 27 of the element 20 having a thickness that is, at least in comparison, relatively constant. The elements 20 arrive into contact with the pulleys 1 and 2 during operation of the transmission through lateral contact surfaces 28.

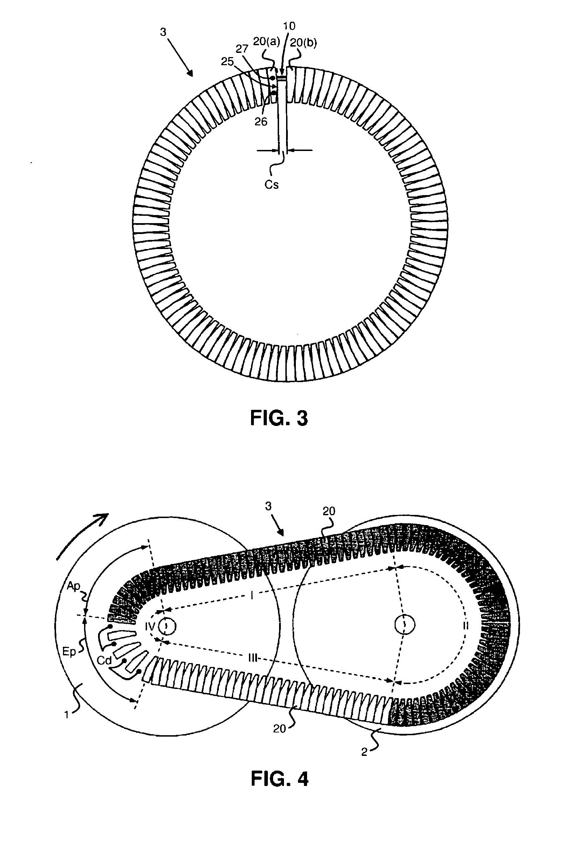

Figure 3 provides a schematic side elevation of the drive belt 3 placed in a circular posture and illustrates the feature of the belt's longitudinal clearance. Such longitudinal belt clearance is defined as the width of a gap that exists between the two adjacent transverse elements 20(a) and 20(b) at the radial position of the rocking edge 25, when all of the transverse elements 20 of the drive belt 3 are mutually abutting. When measured in a new drive belt 3 that is circularly arranged, i.e. with the transverse elements 20 placed in a continuous, essentially circular array as indicated in figure 3, the clearance is called the initial static clearance Csi. A certain amount of initial static clearance Csi is normally provided to allow the drive belt 3 to be assembled without difficulty. The longitudinal belt clearance may also result from wear of, in particular, the transverse elements 20. which causes a minimally, however notional increase of the longitudinal belt clearance over the service life of the drive belt 3. Moreover, the longitudinal belt clearance that occurs dynamically, i.e. during operation varies in dependency on the load applied to the drive belt 3, as well as the exact posture of the drive belt 3 in the transmission, i.e. on the radii of the bent trajectory parts thereof. By the end of the service life of the drive belt 3 such dynamic clearance Cd (as indicated in figure 4) ultimately amounts to in the order of ten times the said initial static clearance Csi.

Figure 4 provides a simplified axial cross section the transmission of figure 1. indicating the four main trajectory parts of the drive belt 3, i.e. a longitudinally bent part I at the location of the driving pulley 1, a taut straight part II, wherein the transverse elements 20 of the drive belt 3 are transported from the driving pulley 1 to the driven pulley 2, a further longitudinally bent part III at the location of the driven pulley 2 and a slack straight part IV, wherein the elements 20 are returned from the driven pulley 2 to the driving pulley 1. Hereby, the curved arrow at the driving pulley 1 indicates the direction of rotation thereof. The transverse elements 20 that are shaded in gray are subjected to a relatively high push force during operation of the transmission, which force effectively pushes the elements from the driving pulley 1 to driven pulley 2, whereas between the other elements 20 of the drive belt 3 that are returning from the driven pulley 2 to the drive 1 relatively little force is exerted.

Still, because of pulley deformation during operation the transverse elements 20 experience a resistance when entering the driving pulley 1, i.e. arrive into frictional contact with the discs thereof. To overcome this entry resistance at least some compressive force has to be build-up between the transverse elements 20 at this location in this slack straight part IV, whereby a continuous array or string of elements is formed also in this trajectory part. As a result hereof, the dynamic clearance Cd tends to accumulate between the transverse elements 20 that are located in a first or entry part Ep of the longitudinally bent part I on the driving pulley 1, which phenomenon is illustrated in figure 4.

This above means that relatively few transverse elements 20 are available on the driving pulley 1 for the build-up of the push force in the drive belt 3, which elements 20 form the so-called compression part Cp of the longitudinally bent part I on the driving pulley 1. The dynamic clearance Cd that still exists between the elements 20 in the entry part Ep is removed by the elements 20 in the compression part Cp slipping backwards relative to the rotational movement of the driving pulley 1. Apart from adversely affecting the transmission efficiency, this phenomenon also causes the clamping force applied by the discs of the driving pulley 1 onto the elements 20 to be relatively and disadvantageously high, since only this latter part Cp is available for force transfer between driving pulley 1 and drive belt 3.

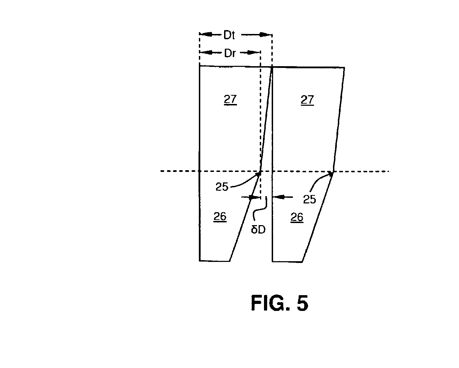

It would thus be advantageous to limit the extent of the entry part Ep on the driving pulley 1, wherein a longitudinal play between the elements 20 occurs, and preferably to eliminate its occurrence altogether. According to the invention, the above may be realized by tapering the top section 27 of the elements 20, i.e. by making the radial outside of the said top section 27 thicker then the radial inside thereof. Such measure prescribed by the present invention is illustrated in figure 5 in a side view of two adjacent transverse elements 20, however, in an exaggerated and schematic manner.

In figure 5 the thickness of the transverse elements 20 just radially outward from the rocking edge 25, i.e. at the radial inside of the said top section 27 is indicated by Dr, whereas Dt indicates the thickness of transverse elements 20 at the radial outside thereof. The difference between those two parameters Dr, Dt, i.e. Dt-Dr, represents the amount of tapering $\delta D$ of the said top section 27 of an individual transverse element 20.

By applying the transverse element design of figure 5 it is effected that in the slack straight or return trajectory part III of the drive belt 3, i.e. where the transverse elements 20 are transported from the driven pulley 2 back to the driving pulley 1, adjacent transverse elements 20 are mutually contacting through their respective thickest part, i.e. on the radial outside thereof. Hereby a small play exists between each pair of adjacent transverse elements 20 at the radial position of their respective rocking edges 25, which is at most equal to the said amount of tapering $\delta D$. According to the invention the amount of tapering $\delta D$ is defined such that at least the initial static clearance Csi, but preferably also the said dynamic clearance Cd, is accommodated in the said play, at least when the latter is combined over all pairs of adjacent elements 20 in the slack straight trajectory part III of the drive belt 3. Thus, during operation of the transmission according to the present invention, at least the initial static clearance Csi will be located in the said slack straight trajectory part III, such that the amount or part of the dynamic clearance Cd that is still present in the said entry part Ep will at least be substantially and favorably reduced. By this measure, the transverse elements will slip considerably less relative to the pulley discs of the driving pulley and the transmission efficiency will improve as a consequence. Moreover, wear in the frictional contact between the drive belt 3 and the pulleys 1, 2 could also be reduced favorably.

Depending on the specific design of the transmission and in particular on the drive belt design applied therein, the said dynamic clearance Cd can potentially even be removed completely from the said entry part Ep by applying the measure defined by the present invention to the appropriate extend.

## Claims

1. Drive belt (3) for a continuously variable transmission comprising an array of several hundred transverse elements (20) provided on and in sliding relationship with an endless carrier (10) of the belt (3), each transverse element (20) includes a bottom section (26) located radially inward from an axially oriented rocking edge (25) of the transverse element (20) and having a longitudinal dimension that reduces considerably in radially inward direction and top section (27) located radially outward from the rocking edge (25) and having a longitudinal dimension that increases slightly in radially outward direction, **characterized in that**, on average between the transverse elements (20) of the drive belt (3), the said increase in longitudinal dimension of the said top section (27) in radially outward direction is larger than:

$$\frac{4 \cdot Dr \cdot Csi}{L}$$

wherein:

- Dr is the longitudinal dimension of the transverse elements (20) at the rocking edge (25) thereof,
- Csi is an amount of longitudinal play that is initially incorporated in the drive belt (3) as measured when the belt (3) is placed in a circular posture between the rocking edges (25) of the transverse elements (20) thereof, and wherein
- L is the belt's circumference length at the rocking edge (25) of the transverse elements (20) thereof
with any value of such increase in longitudinal dimension of the said top section (27) below 0.0035•Dr and above 0.01•Dr explicitly being disclaimed.

2. The drive belt (3) according to claim 1, wherein the said increase in longitudinal dimension of the said top section (27) in radially outward direction is smaller than:

$$\frac{40 \cdot Dr \cdot Csi}{L}.$$

**Patentansprüche**

1. Antriebsriemen (3) für ein stufenloses Getriebe, umfassend eine Anordnung von mehreren Hundert Querelementen (20), die auf einem Endlosträger (10) des Riemens (3) vorgesehen sind und damit in Gleitbeziehung stehen, wobei jedes Querelement (20) einen unteren Abschnitt (26), der radial einwärts eines axial ausgerichteten Kipprands (25) des Querelements (20) positioniert ist und eine Längsabmessung aufweist, die sich in radial nach innen verlaufender Richtung wesentlich verkleinert, und einen oberen Abschnitt (27), der radial auswärts des Kipprands (25) positioniert ist und eine Längsabmessung aufweist, die in radial nach außen verlaufender Richtung leicht zunimmt, enthält, **dadurch gekennzeichnet, dass** zwischen den Querelementen (20) des Antriebsriemens (3) durchschnittlich die Zunahme der Längsabmessung des oberen Abschnitts (27) in radial nach außen verlaufender Richtung größer ist als :

$$\frac{4 \cdot Dr \cdot Csi}{L}$$

wobei:

- Dr die Längsabmessung der Querelemente (20) an ihrem Kipprand (25) ist,
- Csi ein anfangs in dem Antriebsriemen (3) enthaltenes Auslaß an Längsspiel ist, wie es gemessen wird, wenn der Riemen (3) in einer kreisförmigen Position zwischen den Kipprändern (25) der Querelemente (20) davon platziert ist, und wobei
- L die Umfangslänge des Riemens am Kipprand (25) der Querelemente (20) davon ist,
wobei ein beliebiger Wert solch einer Längsabmessungszunahme des oberen Abschnitts (27) unter 0,0035.Dr und über 0,01.Dr explizit ausgeschlossen wird.

2. Antriebsriemen (3) nach Anspruch 1, wobei die Längsabmessungszunahme des oberen Abschnitts (27) in einer radial nach außen verlaufenden Richtung kleiner ist als:

$$\frac{40 \cdot Dr \cdot Csi}{L}.$$

**Revendications**

1. Courroie d'entraînement (3) pour une transmission à variation continue comprenant un ensemble de plusieurs centaines d'éléments transversaux (20) prévus sur, et en relation de glissement avec, un support sans fin (10) de la courroie (3), chaque élément transversal (20) comportant une section inférieure (26) située radialement à l'intérieur depuis un bord de basculement (25) orienté axialement de l'élément transversal (20) et ayant une dimension longitudinale qui se réduit considérablement dans la direction radialement vers l'intérieur et une section supérieure (27) située radialement à l'extérieur depuis le bord de basculement (25) et ayant une dimension longitudinale qui augmente légèrement dans la direction radialement vers l'extérieur, **caractérisée en ce que**, en moyenne entre les éléments transversaux (20) de la courroie d'entraînement (3), ladite augmentation de dimension longitudinale de ladite section supérieure (27) dans la direction radialement vers l'extérieur est plus grande que :

$$\frac{4 \cdot Dr \cdot csi}{L}$$

où :

- Dr est la dimension longitudinale des éléments transversaux (20) au niveau du bord de basculement (25) de ceux-ci,
- Cs est une quantité de jeu longitudinal qui est initialement incorporé dans la courroie d'entraînement (3) tel que mesuré lorsque la courroie (3) est placée dans une position circulaire entre les bords de basculement (25) des éléments transversaux (20) de celle-ci, et où
- L est la longueur de la circonférence de courroie au niveau du bord de basculement (25) des éléments transversaux de celle-ci,
et toute valeur d'une telle augmentation de la dimension longitudinale de ladite section supérieure (27) en dessous de 0,0035*Dr et au-dessus de 0,01*Dr étant explicitement exclue.

2. Courroie d'entraînement (3) selon la revendication 1, dans laquelle ladite augmentation de la dimension longitudinale de ladite section supérieure (27) dans la direction radialement vers l'extérieur est plus petite que :

$$\frac{40 \cdot Dr \cdot csi}{L} \; .$$

**FIG. 1**

**FIG. 2**

**FIG. 3**

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1219860 A
- EP 1069342 A
- JP 63266247 A
- WO 9804847 A